# DEMANDE DE BREVET EUROPEEN

(11) **EP 2 186 459 A1**
(43) Date de publication de la demande: **19.05.2010**
(21) Numéro de dépôt: 08305808.1
(22) Date de dépôt: 18.11.2008
(51) Int. Cl.: A47K 3/28

(54) **Douche solaire**

(71) Demandeur: Alceo, 40220 Tarnos (FR)
(72) Inventeur: Prudet, Laurent, 40220, TARNOS (FR)
(74) Mandataire: Fantin, Laurent

(57) **Abrégé**

L'objet de l'invention est une douche solaire comprenant un réservoir d'eau (12), ledit réservoir d'eau comportant au moins un module (18, 20) de stockage de l'eau, chaque module (18, 20) étant muni d'au moins deux conduits (22, 26, 24, 28) et d'un canal (30, 32) de connexion du module (18, 20) à une robinetterie (14) ou à un pommeau (16), et chaque conduit (22, 24, 26, 28) et chaque canal (30, 32) desdits modules (18, 20) s'étendant le long d'une direction principale (y), **caractérisée en ce que** chaque module (18, 20) est extrudé et pourvu à chacune de ses extrémités de moyens d'obturation, et en ce que chaque conduit (22, 26, 24, 28) de chaque module (18, 20) présente une section transversale sensiblement circulaire.

## Description

La présente invention concerne une douche solaire.

Généralement, une douche solaire comporte un réservoir de stockage d'eau dont l'exposition aux rayons solaires réchauffe l'eau stockée, permettant à un utilisateur de bénéficier d'une eau chaude au moment de sa douche.

Cependant, une telle douche connue est vendue à un prix élevé du fait d'une conception complexe, est encombrante donc difficile à transporter, à mettre en place ou encore à stocker. Une telle douche présente également l'inconvénient qu'elle se déforme en raison de la pression de l'eau.

Le but de l'invention est de remédier à ces inconvénients en proposant une douche solaire de conception simple, économique à réaliser.

A cet effet, l'invention concerne une douche solaire comprenant un réservoir d'eau, ledit réservoir d'eau comportant au moins un module de stockage de l'eau, chaque module étant muni d'au moins deux conduits et d'un canal de connexion du module à un robinet ou à un pommeau, et chaque conduit et chaque canal desdits modules s'étendant le long d'une direction principale, **caractérisée en ce que** chaque module est extrudé et pourvu à chacune de ses extrémités de moyens d'obturation, et en ce que chaque conduit de chaque module présente une section transversale sensiblement circulaire.

L'invention sera décrite maintenant plus en détail en référence aux figures annexées données uniquement à titre d'exemple et dans lesquelles :
- la figure 1 est une vue en perspective d'une douche solaire selon un premier mode de réalisation de l'invention,
- la figure 2 est une vue en coupe transversale de la douche solaire de la figure 1,
- la figure 3 est une vue en coupe transversale d'un module de la douche solaire de la figure 1,
- la figure 4 est une vue en perspective d'une douche solaire selon un second mode de réalisation de l'invention,
- la figure 5 est une vue en coupe transversale de la douche solaire de la figure 4, et
- la figure 6 est une vue schématique de la circulation de l'eau dans la douche solaire de la figure 4.

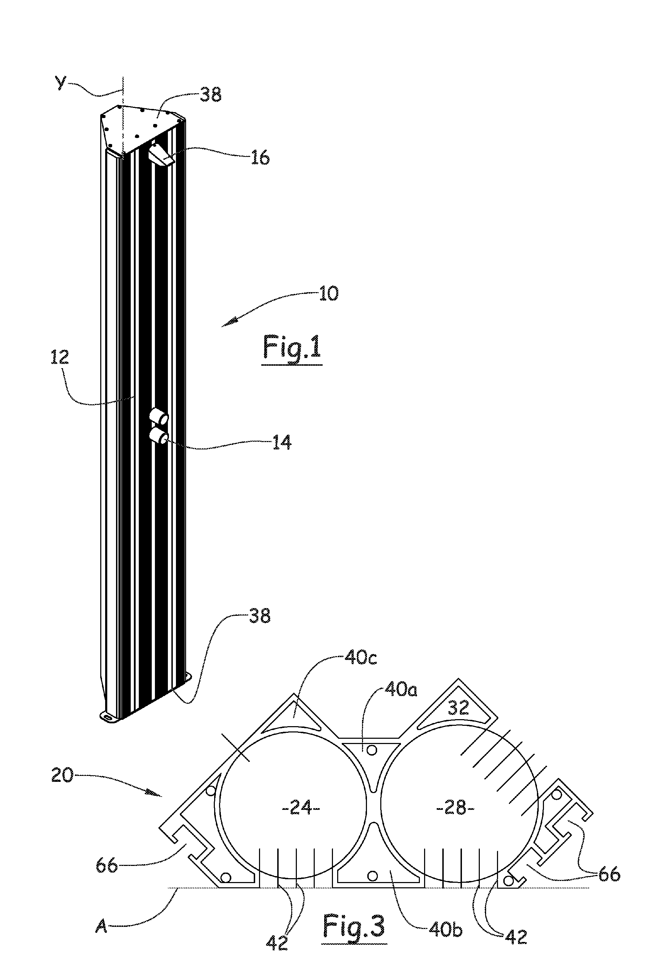

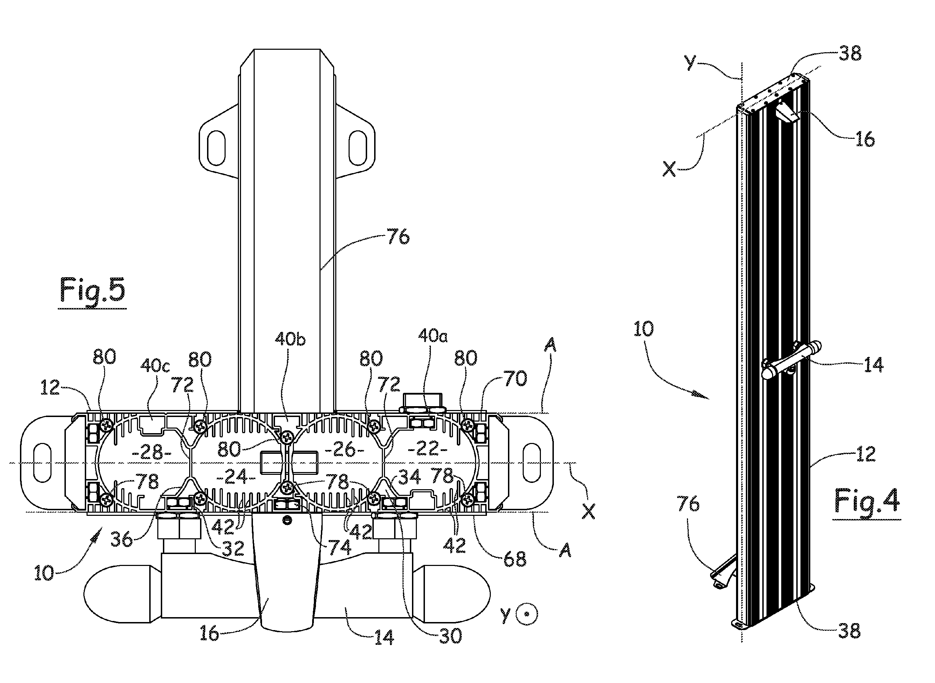

Comme illustré particulièrement aux figures 1 et 4, la présente invention concerne une douche solaire 10 comprenant un réservoir de stockage d'eau 12 et une robinetterie 14, de type mélangeur ou mitigeur, permettant de faire couler l'eau par un pommeau 16.

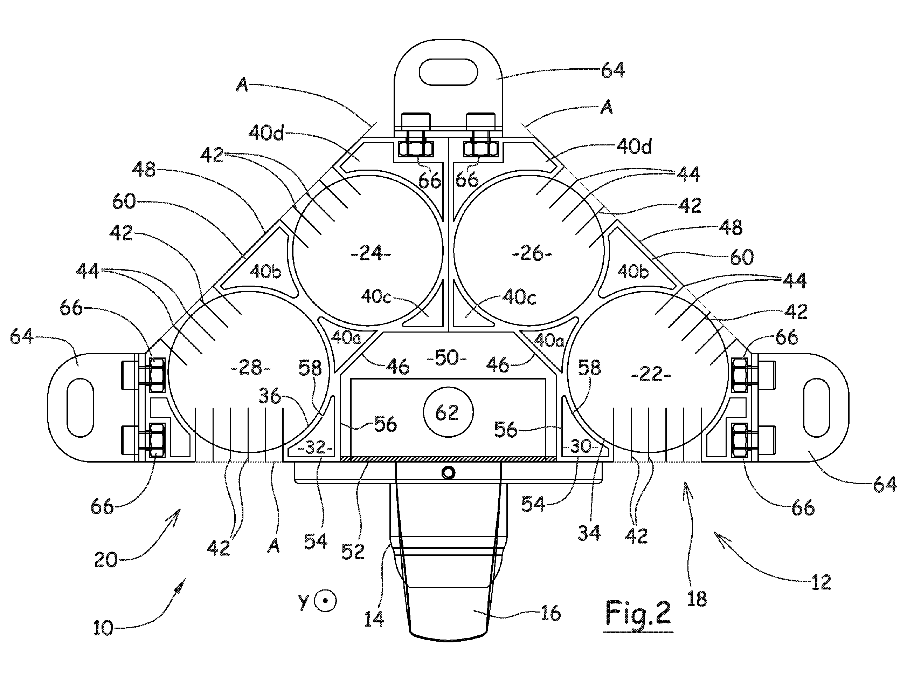

Comme visible aux figures 2 et 5, le réservoir comprend deux modules 18 et 20.

Chacun de ces modules est muni d'un conduit d'entrée 22, 24 d'eau dans le module 18, 20 et d'un conduit de sortie 26, 28 d'eau hors du module 18 , 20, chaque conduit 22, 24, 26, 28 s'étendant verticalement le long d'une direction notée Y. Le conduit d'entrée 22 du premier module 18 et le conduit de sortie 28 du second module 20 forment les bords verticaux du réservoir 12, et seront dénommés ci-après conduits externes du réservoir 12, tandis que les deux autres conduits, à savoir le conduit de sortie 26 du premier module 18 et le conduit d'entrée 24 du second module 20 seront dénommés conduits internes du réservoir 12.

Les conduits internes 26, 24 et externes 22, 28 des modules 18 et 20 sont réalisés à partir d'un matériau conducteur thermique pour assurer le chauffage de l'eau contenue dans le réservoir 12.

Les modes de réalisation détaillés concernent une douche comportant deux modules à deux conduits, mais il est évident que l'invention couvre également les douches comprenant au moins un module et les modules comprenant au moins deux conduits et également les modules comprenant plus de deux conduits.

Les conduits 22 à 28 communiquent entre eux comme expliqué plus loin dans la description, de sorte que l'eau circule dans le réservoir 12 et est renouvelée pour permettre une utilisation continue de la douche 10.

Comme visible sur les figures 2 et 5, le réservoir comprend un canal de connexion 30 du premier module 18 au robinet d'eau froide de la robinetterie 14, ou canal d'eau froide 30, et un canal de connexion 32 du second module 20 au robinet d'eau chaude de la robinetterie 14, ou canal d'eau chaude 32. Le canal d'eau froide 30 est disposé sur une partie de la paroi latérale extérieure 34 du conduit externe 22 du premier module 18 et le canal d'eau chaude 32 sur une partie de la paroi latérale extérieure 36 du conduit externe 28 du second module 20. On note que la robinetterie 14 est fixée horizontalement.

Les canaux 30 et 32 s'étendent selon la direction Y sur toute la longueur des modules à la manière des conduits 22 à 28.

Conformément à l'invention, chaque module 18, 20 est obtenu par extrusion et le réservoir 12 est rendu hermétique par des moyens 38 qui obturent les deux extrémités de chaque module 18, 20. Comme représenté aux figures 1 et 4, les moyens d'obturation 38 se présentent sous la forme de deux plaques, une première plaque prévue à l'extrémité basse des modules 18, 20 et une seconde plaque à l'extrémité haute desdits modules 18, 20. Selon une autre variante non représentée, les moyens d'obturation 38 sont des bouchons qui ferment individuellement chaque conduit et canal.

Comme plus particulièrement visible aux figures 2, 3 et 5, les profilés constituant les conduits 22 à 28 présentent une section au moins partiellement circulaire, c'est-à-dire qu'au moins 70% de son périmètre est circulaire, la forme de cette section permettant de réduire la déformation en raison de la pression de l'eau. En effet, l'eau circulant dans le réservoir 12 doit être d'une pression nécessaire pour permettre à un individu de prendre sa douche et de ce fait exerce un effort sur les conduits des modules dans lesquels elle est contenue. La section sensiblement circulaire des conduits augmentant la résistance des conduits, le réservoir 12 selon l'invention se déforme peu lors d'un usage de la douche.

Comme visible aux figures 2, 3 et 5, la douche solaire 10 comprend au moins un réservoir de stockage 40 d'un élément caloporteur, tel qu'un fluide comme de l'huile ou tel que de la poudre. Ce réservoir 40, réalisé à partir de matériau conducteur thermique, est disposé de préférence en contact direct avec une partie de la paroi latérale d'un des conduits 22 à 28 et parallèlement à celui-ci. Ainsi, l'élément caloporteur étant en permanence contenu dans ces réservoirs 40, il est chauffé par les rayons solaires et transfère à l'eau circulant à proximité dans les conduits 22 à 28 la chaleur ainsi emmagasinée.

Chaque conduit 22 à 28 est muni sur une partie de sa paroi latérale destinée à être exposée au soleil d'ailettes 42 réalisées à partir d'un matériau conducteur thermique permettant d'augmenter la surface du réservoir 12 exposée aux rayons solaires et, de ce fait, d'augmenter l'efficacité du chauffage de l'eau. Ces ailettes 42 sont disposées parallèlement les unes aux autres et s'étendent en saillie du conduit depuis l'extérieur du conduit jusqu'à l'intérieur du conduit. La section transversale de chaque ailette 42 est sensiblement linéaire et les extrémités externes 44 des ailettes 42 sont sensiblement alignées le long d'une direction d'alignement A assurant ainsi l'exposition uniforme des ailettes 42 aux rayons solaires.

Avantageusement, les conduits interne et externe de chaque module sont solidaires par une partie de leur paroi latérale respective, préférentiellement sur toute la longueur du module, de sorte que chaque module est monolithique.

Pour obtenir de manière économique une douche, les modules 18 et 20 sont identiques et tronçonnés dans le même profilé ayant au moins deux conduits et au moins un canal pour la connexion à la robinetterie.

L'invention va maintenant être décrite selon deux modes de réalisation spécifiques.

Selon un premier mode de réalisation de l'invention illustré aux figures 1 à 4, les deux modules 18 et 20 du réservoir 12 sont montés verticalement en faisant un angle entre eux, de manière à ne pas être disposés dans le même plan et de sorte que le réservoir 12 présente une section en forme de V. Ainsi, les conduits externes 22 et 28 se font face et les conduits internes 24 et 26 se font face. Chaque module 18, 20 comprend un côté intérieur 46 et un côté extérieur 48, les côtés intérieurs 46 se faisant face et délimitant un espace interne 50 entre les modules 18 et 20 tandis que les côtés extérieurs 48 sont exposés aux rayons solaires. L'espace interne 50 est refermé par une plaque 52 s'étendant sur toute la longueur du réservoir 12, de sorte que la douche 10 a une section transversale triangulaire.

Dans ce mode de réalisation, les conduits externes 22 et 28 et internes 24 et 26 sont de section transversale entièrement circulaire. Les canaux d'eau froide 30 et d'eau chaude 32 présentent chacun une section transversale sensiblement triangulaire et possèdent un côté externe 54 et un côté interne 56 formant un angle sensiblement droit et un bord arqué 58 dont la courbure coïncide avec la courbure du conduit externe 22, 28 auquel ils sont associés. Les côtés externes 54 des deux canaux 30 et 32 sont dans le prolongement l'un de l'autre le long de la direction A tandis que les côtés internes 56 sont parallèles et en regard l'un de l'autre.

Les conduits externes 22 et 28 du réservoir 12 comprennent deux ensembles d'ailettes 42 de conduction thermique, chaque ensemble étant disposé d'un côté exposé aux rayons solaires, tandis que les conduits internes 24 et 26 comprennent chacun un ensemble d'ailettes 42, disposé du seul côté de ce conduit 24, 26 qui est exposé aux rayons solaires.

Chacun des modules 18 et 20 comprend également quatre réservoirs 40 destinés à stocker l'élément caloporteur, comme expliqué plus haut. Deux de ces réservoirs, référencés 40a et 40b, de section transversale triangulaire évasée, sont disposés entre les deux conduits du module 18, 20, respectivement côté intérieur 46 et côté extérieur 48, le réservoir 40b côté extérieur 48 comprenant une base alignée 60 avec la direction d'alignement A des ailettes 42. Les deux autres réservoirs 40c et 40d sont disposés sur une partie de la paroi latérale du conduit interne 26, 24, respectivement dans l'espace interne 50 délimité par les deux modules 18 et 20 et côté extérieur 48.

Conformément à ce premier mode de réalisation, les deux modules 18, 20 sont extrudés selon un même profilé et l'un 18 des modules 18, 20 est monté contre l'autre module 20 par pivotement du profilé d'un angle de 180° dans un plan vertical. En d'autres termes, l'un 18 des modules 18, 20 est monté tête bêche par rapport à l'autre module 20.

Selon ce mode de réalisation, le réservoir 12 comprend un conduit intérieur 62 disposé dans l'espace interne 50 entre les deux modules 18 et 20 et dont le rôle est d'alimenter en eau le pommeau 16 de la douche 10. Selon ce mode de réalisation, la robinetterie 14 est partiellement encastrée dans l'espace interne 50.

La forme spécifique du réservoir 12 selon ce premier mode de réalisation assure que le réservoir 12 tient seul en équilibre, c'est-à-dire qu'il est autoporté, et ne nécessite pas la pose d'un jambage. Cependant, afin de renforcer cette stabilité naturelle, chaque module 18, 20 est vissé à des pattes de fixation au sol 64 et comprend à proximité du conduit externe 22, 28 deux évidements 66 pour recevoir chacun une vis, et à proximité du conduit interne 24, 26, un évidement 66 de réception d'une vis.

Conformément à un second mode de réalisation de l'invention illustré aux figures 4 et 5, les modules 18 et 20 sont disposés dans le même plan et alignés horizontalement selon une direction X, chaque conduit 22 à 28 et canal 30, 32, étant dirigé verticalement, et délimitent une face avant 68 de la douche 10 sur laquelle sont fixés le pommeau 16 et la robinetterie 14, et une face arrière 70.

Selon ce mode de réalisation, les conduits internes 24 et 26 et externes 22 et 28 présentent une section partiellement circulaire, comme décrit précédemment. Les conduits interne 26, 24 et externe 28, 22 de chaque module 18, 20 sont solidaires l'un de l'autre par une portion de leur paroi latérale respective, sensiblement plane et formant jonction interne 72.

Chaque conduit 22 à 28 est muni de deux ensembles d'ailettes 42 en regard l'un de l'autre et disposés respectivement sur la face avant 68 et sur la face arrière 70 du réservoir 12, les directions A d'alignement des extrémités externes de chaque ensemble étant parallèles à la direction X.

Les canaux de connexion 30 et 32 du réservoir 12 sont disposés sur la face avant 68 du réservoir 12 et dans le prolongement l'un de l'autre.

Selon ce second mode de réalisation, le réservoir 12 comprend également un canal 74 de circulation de l'eau issue de la robinetterie 14 vers le pommeau 16 de la douche 10, ce canal 74 étant disposé entre les conduits internes 24 et 26 du réservoir 12, aligné avec les canaux d'eau froide 30 et d'eau chaude 32 du réservoir 12 et parallèle à ces canaux 30 et 32.

La douche 10 comprend trois réservoirs 40a, 40b et 40c de stockage de l'élément caloporteur, chacun de ces réservoirs étant sur la face arrière 70 des modules alignés, et sensiblement en regard du canal d'eau froide 30, du canal de circulation 74 vers le pommeau 16 et du canal d'eau chaude 32.

En résumé, le réservoir 12 comprend trois paires de canaux 30, 40a, 74, 40b, et 32, 40c, les canaux d'une paire étant disposés en regard l'un de l'autre et de part et de part et d'autre d'un plan P comprenant la direction verticale Y et la direction d'alignement X des modules 18 et 20, les canaux de connexion 30, 32 et 74 des modules 18, 20 à la douche 10 étant ceux des canaux disposés côté face avant 68 de la douche 10.

Conformément à ce second mode de réalisation, les deux modules 18 et 20 sont extrudés selon un même profilé et l'un 18 des modules 18, 20 est monté contre l'autre module 20 par pivotement du profilé d'un angle de 180° dans un plan horizontal.

De ce fait, il est prévu que chaque module 18, 20 est muni de trois canaux, respectivement 30, 40a et 40b et 74, 40c et 32, un couple de canaux, respectivement 30, 40a et 32, 40c, étant disposé de part et d'autre du conduit externe 22, 28 et un canal 40b, 74 sur le conduit interne 26, 24. Ainsi, cette configuration assure que, lors du pivotement du profilé et de l'alignement des modules, les trois canaux disposés sur la face avant soient les canaux de connexion à la robinetterie et au pommeau, comme expliqué plus haut, tandis que les trois autres canaux soient les réservoirs de stockage de l'élément caloporteur, comme expliqué plus haut.

Selon une variante non représentée de ce mode de réalisation, un seul 24, 26 des deux conduits internes 24, 26 est muni d'un canal, portant à deux seulement le nombre de réservoirs de l'élément caloporteur.

Selon ce mode de réalisation, le réservoir 12 est maintenu en équilibre par une équerre 76 fixée sur sa face arrière 70. Deux ensembles de vis introduites dans des évidements 78, 80 alignés respectivement sur la face avant 68 et la face arrière 70 du réservoir 12 permettent de solidariser les plaques 38 aux extrémités des modules.

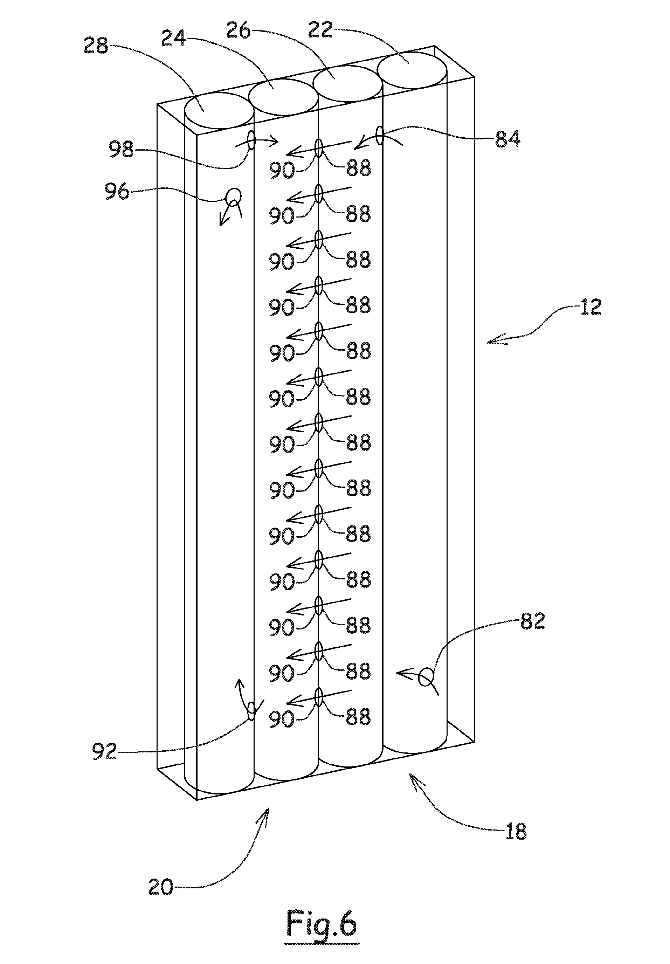

Les moyens de communication des conduits et canaux, ainsi que le fonctionnement de la douche solaire vont maintenant être décrits, et sont identiques pour les deux modes de réalisation déjà détaillés. Ils sont schématiquement représentés à la figure 6 pour la douche solaire selon le second mode de réalisation.

Conformément à l'invention, le conduit externe 22 du premier module 18 est percé dans sa partie basse d'un orifice 82 destiné à recevoir un embout d'un tuyau pour alimenter le réservoir 12 en eau froide et le module 18 est percé dans sa partie haute d'un orifice 84 de passage de l'eau entre le conduit externe 22 et le conduit interne 26. Le conduit 26 est également percé de plusieurs orifices 88 de transfert pour que l'eau puisse circuler d'un module à l'autre. Pour ce faire, le conduit interne 24 du second module 20 est percé d'orifices 90 situés en regard des orifices 88 de transfert du conduit interne 26 du premier module 18, ce qui permet effectivement à l'eau d'être transférée du premier module 18 au second module 20. Le nombre de ces orifices de transfert et/ou leurs diamètres sont paramétrés pour qu'il y ait une continuité des grandeurs physiques régissant la circulation de l'eau entre les deux modules 18 et 20.

Le module 20 est percé dans sa partie basse d'un orifice 92 de passage de l'eau entre le conduit interne 24 et le conduit externe 28. Ce conduit externe 28 du second module 20 comprend dans sa partie haute un orifice de sortie 96 de l'eau chaude.

Lorsqu'un usager prend une douche, un courant est crée depuis l'orifice d'entrée 82 d'eau froide jusqu'à l'orifice de sortie 96 d'eau chaude. Ainsi, l'eau circule dans le réservoir 12 selon un trajet sensiblement en zigzag.

Avantageusement, le conduit externe 28 du second module 20 est percé dans sa partie haute en regard du conduit interne d'un orifice 98 qui permet une recirculation de l'eau dans le second module 20, garantissant une eau plus chaude, plus longtemps. Cet orifice 98 est d'un diamètre inférieur au diamètre de l'orifice 92.

Le module 18 comprend en partie basse un perçage entre le conduit 22 et le canal d'eau froide 30 qui alimente directement le robinet d'eau froide de la robinetterie 14. Le module 20 comprend en partie haute un perçage entre le conduit 28 et le canal d'eau chaude 32, disposé en regard de l'orifice d'évacuation 96, de sorte que le canal 32 alimente le robinet d'eau chaude. Le canal d'alimentation du pommeau de douche, qu'il s'agisse du conduit intérieur 62 en cuivre selon le premier mode de réalisation, ou le canal de connexion 74 selon le second mode de réalisation, est traversé par l'eau à température intermédiaire, choisie par l'usager grâce à la robinetterie 14 de type mitigeur ou mélangeur, et ce, jusqu'au pommeau 16 de la douche 10 par lequel l'eau s'écoule hors du réservoir 12.

On notera que l'emploi des canaux de connexion permet que la robinetterie reste horizontale tout en étant alimentée à la fois en eau froide et en eau chaude.

On notera également que, selon une variante de l'invention, le module comprend des canaux adjacents aux conduits sur lesquels peuvent être fixés des brumisateurs.

On notera par ailleurs que l'objet de la présente invention ne se limite pas aux deux modes de réalisation détaillés mais couvre d'autres variantes. En particulier, dans les modes décrits, chaque conduit est muni d'ailettes, mais il suffit qu'au moins un conduit 22, 26, 24, 28 d'au moins un module 18, 20 du réservoir 12 comporte sur une partie de sa paroi latérale de telles ailettes 42.

## Revendications

1. Douche solaire comprenant un réservoir d'eau (12), ledit réservoir d'eau (12) comportant au moins un module (18, 20) de stockage de l'eau, chaque module (18, 20) étant muni d'au moins deux conduits (22, 26, 24, 28) et d'un canal (30, 32) de connexion du module (18, 20) à une robinetterie (14) ou à un pommeau (16), et chaque conduit (22, 24, 26, 28) et chaque canal (30, 32) desdits modules (18, 20) s'étendant le long d'une direction principale (y), **caractérisée en ce que** chaque module (18, 20) est extrudé et pourvu à chacune de ses extrémités de moyens d'obturation (38), et **en ce que** chaque conduit (22, 26, 24, 28) de chaque module (18, 20) présente une section transversale sensiblement circulaire.

2. Douche solaire selon la revendication 1, **caractérisée en ce que** chaque conduit (22, 26, 24, 28) est réalisé à partir d'un matériau conducteur thermique.

3. Douche solaire selon l'une des revendications 1 ou 2, **caractérisée en ce qu'**au moins un conduit (22, 26, 24, 28) d'au moins un module (18, 20) du réservoir (12) est muni sur une partie de sa paroi latérale d'ailettes (42) réalisées à base de matériau conducteur thermique, lesdites ailettes (42) s'étendant vers l'extérieur dudit au moins un conduit (22, 26, 24, 28).

4. Douche solaire selon l'une quelconque des revendications précédentes, **caractérisée en ce qu'**au moins un module (18, 20) comprend des moyens de stockage d'un élément caloporteur disposés à proximité d'au moins un conduit (22, 26, 24, 28), de sorte que l'eau contenue dans ledit conduit (22, 26, 24, 28) soit chauffée par l'énergie thermique emmagasinée et restituée par ledit élément caloporteur.

5. Douche solaire selon l'une quelconque des revendications précédentes, **caractérisée en ce que** le réservoir (12) comprend deux modules (18, 20) de stockage d'eau et **en ce que** ces deux modules (18, 20) sont montés le long de la direction principale (y) en faisant un angle entre eux, de sorte que le réservoir (12) présente une section transversale en forme de V.

6. Douche solaire selon la revendication précédente, **caractérisée en ce que** les deux modules (18, 20) présentent le même profilé et **en ce que** les deux modules (18, 20) sont montés tête bêche.

7. Douche solaire selon l'une quelconque des revendications 1 à 4, **caractérisée en ce que** réservoir (12) comprend deux modules (18, 20), les deux modules (18, 20) étant alignés selon une direction d'alignement (X) et de même profilé, **en ce que** l'un (18) des modules (18, 20) est monté par pivotement du profilé d'un angle plat dans un plan transversal à la direction principale (y), et **en ce que** l'un (22, 28 ou 26, 24) des conduits (22, 28, 26, 24) de chaque module (18, 20) comprend au moins deux canaux (30, 40a, 32, 40c) disposés de part et de part et d'autre d'un plan (P) comprenant la direction principale (Y) et la direction d'alignement (X) des modules (18 , 20), les canaux de connexion (30, 32) des modules (18, 20) à la douche (10) étant ceux (30, 32) des canaux (30, 40a, 32, 40c) disposés du côté du plan destiné à former la partie avant (68) de la douche (10).

8. Douche solaire selon la revendication précédente, **caractérisée en ce qu'**au moins un module (18, 20) comprend un canal de connexion (74) du réservoir (12) à un pommeau (16) de la douche (10).

9. Douche solaire selon l'une quelconque des revendications précédentes, **caractérisée en ce que** le réservoir (12) comprend des moyens de communication (84, 92) entre deux conduits adjacents (22, 26, 24, 28), des moyens de communication (88, 90) entre deux modules adjacents (18, 20), et un orifice d'entrée (82) d'eau froide disposé en partie basse d'un conduit (22) d'un premier module (18) ainsi qu'un orifice d'évacuation (96) d'eau chaude disposé en partie haute d'un deuxième module (20), de sorte que l'eau circule dans le réservoir depuis l'orifice d'entrée (82) jusqu'à l'orifice d'évacuation (96) selon un trajet sensiblement en zigzag.

10. Douche solaire selon la revendication précédente, **caractérisée en ce qu'**elle comporte un moyen de passage d'eau (98) dans la partie haute du conduit (28) comportant l'orifice d'évacuation (96) de manière à permettre une recirculation de l'eau chaude.
